# EUROPEAN PATENT SPECIFICATION

(11) **EP 3 520 932 B1**
(45) Date of publication and mention of the grant of the patent: **30.03.2022**
(21) Application number: 19155420.3
(22) Date of filing: 05.02.2019
(51) Int. Cl.: B29C 64/255, B33Y 30/00, B65D 8/00, B65D 6/40, B65D 83/14, B33Y 40/00, B22F 10/20, B22F 10/70, B22F 12/00, B29C 64/153, B33Y 10/00

(54) **POWDER MANAGEMENT SYSTEM, METHOD OF MAKING A POWDER MANAGEMENT CONTAINER AND METHOD OF MANAGING POWDER FOR AN ADDITIVE MANUFACTURING TECHNIQUE**
PULVERMANAGEMENTSYSTEM, VERFAHREN ZUR HERSTELLUNG EINES PULVERMANAGEMENTBEHÄLTERS UND VERFAHREN ZUM VERWALTEN VON PULVER FÜR EINE ADDITIVE HERSTELLUNGSTECHNIK
SYSTEME DE GESTION DE POUDRE, PROCEDE DE FABRICATION D'UN CONTENANT DE GESTION DE POUDRE ET PROCEDE DE GESTION DE POUDRE POUR UNE TECHNIQUE DE FABRICATION ADDITIVE

(30) Priority: 05.02.2018 US 201815888854
(43) Date of publication of application: 07.08.2019
(73) Proprietor: Delavan Inc, West Des Moines, IA 50265 (US)
(72) Inventor: OCKEN, Thomas J., Des Moines, IA Iowa 50310 (US); LOGSDON, Jerry, Van Meter, IA Iowa 50261 (US); SAMO, Joseph, Johnston, IA Iowa 50131 (US); SHEA, Lukas, Carlisle, IA Iowa 50047 (US); GREENFIELD, Jacob, Granger, IA Iowa 50109 (US)
(74) Representative: Dehns

(56) References cited:
- WO-A1-2017/194135
- US-A1- 2017 036 404
- US-A1- 2018 029 864

## Description

### BACKGROUND OF THE INVENTION

### 1. Field of the Invention

The present disclosure relates to additive manufacturing, and more particularly to powder management containers for managing metallic powders in additive manufacturing techniques.

### 2. Description of Related Art

Three-dimensional (3D) printers, like the ProX^{®} DMP 300 series 3D printed part manufacturing system available from 3D Systems Inc. of Circle Rock Hill South Carolina, are commonly used to print articles by fusing metallic powder. Powder for a given build is typically provided to the system in lot-controlled jars, typically one liter in size, and introduced into the system indirectly, through the system airlock, or directly, by breaching the system by removing a panel. The article is printed from a portion of the powder and the residual powder captured for use in a subsequent build.

Indirect introduction entails sequentially moving jars through the airlock, opening the jars, and pouring the jar contents into a supply piston. Direct introduction bypasses the airlock but still requires that an operator sequentially open each jar and pour the jar contents into the system build chamber. While direct introduction can be relatively quick it can expose the jar contents and build chamber to the atmosphere, potentially contaminating the powder. Both indirect and direct powder introduction techniques can present ergonomic challenges for operators and neither alleviate the problem of uncontrolled lot mixing which can occur when residual powder from one build is recycled for use in a subsequent build.

Such conventional systems and techniques, disclosed in US 2018/029864 A1, WO 2017/194135 A1 and US 2017/036404 A1, have generally been considered satisfactory for their intended purpose. However, there remains in the art a need for improved powder management containers. The present disclosure provides a solution for this need.

### SUMMARY OF THE INVENTION

A powder management container includes a keg body having first, second and third ports as defined in claim 1.

In certain embodiments, the keg body can be a commodity-type keg body. The keg body can have a volume that is between about 5 liters (1.32 gallons) and about 60 liters (15.5 gallons). The keg body can have a wall thickness that is greater than thickness of a commodity-type beverage keg of substantially equivalent volume. The keg body can be formed from aluminum, an aluminum alloy, or stainless steel. In accordance with certain embodiments, the first port can be centrally located on a first end of the keg body. The first port can have a flow area that is greater than a flow area of the second port. A tri-clamp flange can be coupled to the keg body and in fluid communication with the keg body interior through the first port. The keg body can have a food-grade polished weld.

It is contemplated that the first port and the second port can be located on a first end of the keg body. A tri-clamp sanitary flange, a threaded fitting, or a Klein Flansche (KF) fitting can be coupled to the keg body and in fluid communication with the keg body interior through the second port. The third port can have a flow area that is smaller than a flow area of the first port. A tri-clamp sanitary flange, a threaded fitting, or a KF fitting can be coupled to the keg body and in fluid communication with the keg body interior through the third port.A method of making a powder management as defined in claim 13 is provided. A method of managing powder for an additive manufacturing technique is defined in claim 15.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic view of a powder being transferred into a powder management container in accordance with the present disclosure, showing powder from jars of a powder lot being introduced into the powder management container;
Fig. 2 is a schematic view of the powder management container of Fig. 1 in an inverted orientation, showing powder being transferred from the powder management container to an additive manufacturing apparatus;
Fig. 3 is schematic view of the powder management apparatus of Fig. 1, showing unused powder from an additive manufacturing apparatus being transferred into the powder management container while retaining lot identification of the unused powder;
Fig. 4 is a perspective view of the powder management container of Fig. 1, showing the ports arranged on the first end of the powder management container;
Fig. 5 is a cross-sectional view of the powder management container of Fig. 1, showing construction of the ports and keg body;
Fig. 6 is a block diagram of a method of making a powder management container, showing steps of the method; and
Fig. 7 is a block diagram of a method of managing powder for an additive manufacturing apparatus, showing steps of the method.

### DETAILED DESCRIPTION OF THE PREFERRED EMBODIMENTS

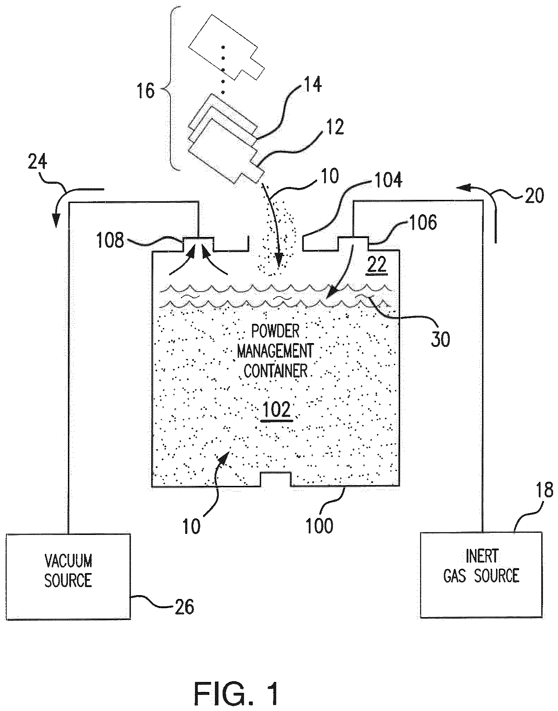

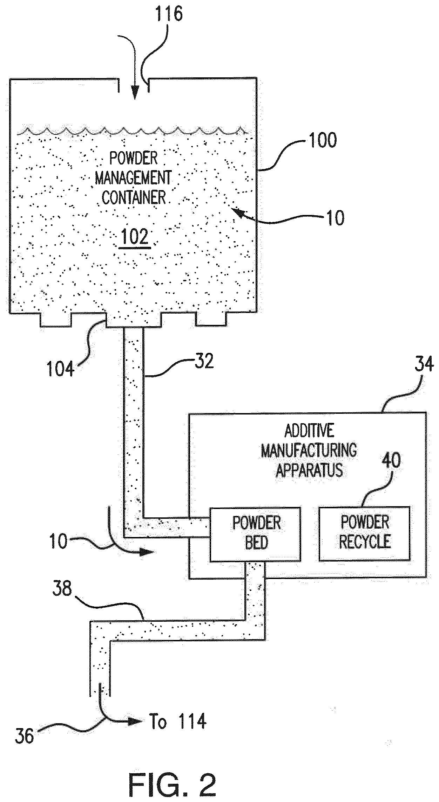

Reference will now be made to the drawings wherein like reference numerals identify similar structural features or aspects of the subject disclosure. For purposes of explanation and illustration, and not limitation, a partial view of an exemplary embodiment of a powder management container in accordance with the disclosure is shown in Fig. 1 and is designated generally by reference character 100. Other embodiments of powder management containers and methods of making powder management containers in accordance with the disclosure, or aspects thereof, are provided in Figs. 2-7, as will be described. The systems and methods described herein can be used for managing powder in additive manufacturing techniques, such as in metal article printing, though the present disclosure is not limited to metal article printing or to additive manufacturing techniques in general.

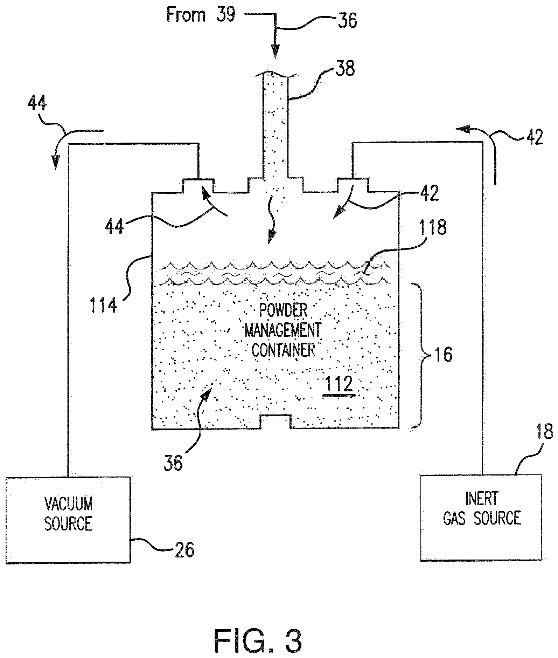

Referring to Figs. 1-3, powder management container 100 is shown. Powder management container 100 is configured for storing a powder 10 for an additive manufacturing technique to reduce build set time, prevent contamination of powder 10 during storage, and provide lot association information to articles formed using the additive manufacturing technique. As shown in Fig. 1, powder management container 100 is configured such that powder 10 can be can transferred to an interior 102 of powder management container 100. As shown in Fig. 2, powder management container 100 is also configured such that powder 10 can be transferred from interior 102 of powder management container 100 to an additive manufacturing apparatus 12. As shown in Fig. 3, powder management container 100 is additionally configured such that unused powder from an additive manufacturing build can be transferred to powder management container 100 for reuse in a subsequent build with lot tracking information, notwithstanding the powder having been previously cycle through an additive manufacturing apparatus.

With reference to Fig. 1, powder 10 is transferred into interior 102 of powder management container 100 through a first port 104 from ajar 12, interior 102 having a volume that is greater than that of jar 12. It is contemplated that jar 12 be a first jar and that powder from one or more second jar 14 be transferred into interior 102 of powder management container 100. As will be appreciated by those of skill in view of the present disclosure, lot information 16 associated with powder from first jar 12 and the one or more second jar 14 transfers with powder 10 to powder management container 100.

In certain embodiments powder 10 can be retained within interior 102 within an inert atmosphere 30. Inert atmosphere 30 can be provided by an inert gas source 18 disposed in fluid communication with interior 102 through a second port 106, inert gas source 18 providing an inert gas flow 20 through second port 106. Examples of suitable inert gases include nitrogen and argon, which tends to displace air due to relative density. As will be appreciated by those of skill in the art in view of the present disclosure, this separates humidity that may be present within the atmosphere 22 of powder management container 100 from powder 10.

In accordance with certain embodiments gas 24 from atmosphere 22 can be actively withdrawn from interior 102 as powder 10 is transferred to interior 102 of powder management container 100. In this respect a vacuum source 26 can be disposed in fluid communication with interior 102 through a third port 108, vacuum source 26 thereby withdrawing gas 24 from atmosphere 22 via third port 108 at a separate location from first port 104, powder 10 entering into interior 102 through first port 104. As will be appreciated by those of skill in the art in view of the present disclosure, this prevents humidity that may be present in atmosphere 22 from contacting powder 10 as powder 10 enters powder management container 100.

With reference to Fig. 2, powder is transferred from powder management container 100 through a powder conduit 32 coupling first port 104 to an additive manufacturing apparatus 34. Transfer of powder 10 from powder management container 100 can be with the assistance of gravity, powder management container 100 being inverted such that first port 104 is below powder 10 relative to gravity, powder 10 thereby flowing to additive manufacturing apparatus 34 through powder conduit 32.

In certain embodiments transfer of powder 10 from powder management container 100 can be assisted via fluid communication with the external environment. In this respect powder management container 100 can include a backfill port 116. Backfill port 116 is arranged on an end of powder management container 100 opposite an end defining first port 104 and second port 106. Backfill port 116 is configured for placing interior 102 in fluid communication with the external environment once powder management container 100 is inverted, gas from the external environment thereby flowing into interior 102 through backfill port 116. As will be appreciated by those of skill in the art, backfilling interior through backfill port 116 can simplify transfer of powder 10 from powder management container 100 as powder 10 is less likely to bridge within interior 102 of powder management container 100.

Referring to Figs. 2 and 3, an unused powder portion 36 of powder 10 is transferred into an interior 112 of a second powder management container 114. Second powder management container 114 is similar to powder management container 100 and is additionally connected to additive manufacturing apparatus 34 such that unused powder portion 36 transfers to second powder management container 114 via a reuse conduit 38. As will be appreciated by those of skill in the art, a portion of the powder supplied to an additive manufacturing apparatus to form an additively manufactured article typically remains subsequent to the build process. This unused powder is typically collected for use in a subsequent build, typically through a powder reuse module 40. While generally suitable for its intended purpose, use of powder recycle module can cause intermixing of the lot(s) from a prior build in a subsequent build. This can compromise the integrity of the lot tracking information associated with the subsequent build. Some quality systems, such as those required for certain aerospace articles, limit or preclude entirely the uncontrolled lot intermixing that can be caused by powder reuse module 40.

To retain lot tracking capability unused powder portion 36 is transferred to second powder management container 114. This prevents powder from prior lots run through additive manufacturing apparatus 34 from intermixing with powder 10 and causes lot information 16 (shown in Fig. 1) to follow unused powder portion 36 to second powder management container 114. In certain embodiments transfer to interior 112 occurs by bypassing powder recycle module 28, unused powder portion 36 thereby not traversing powder reuse module 40. As will be appreciated, residual powder from prior builds captive within powder reuse module 40 also remains separate from unused powder portion 36.

It is contemplated that unused powder portion 36 can be transferred to interior 112 of second powder management container 114 under an inert atmosphere 110, inert atmosphere 110 established by inert gas 42 provided by inert gas source 18. It is also contemplated that gas 44 from within interior 112 can be withdrawn by vacuum source 26, thereby preventing humidity that may be present within gas 44 from contaminating unused powder portion 36 as unused powder portion 36 enters interior 112 as gas 44 exits interior 112.

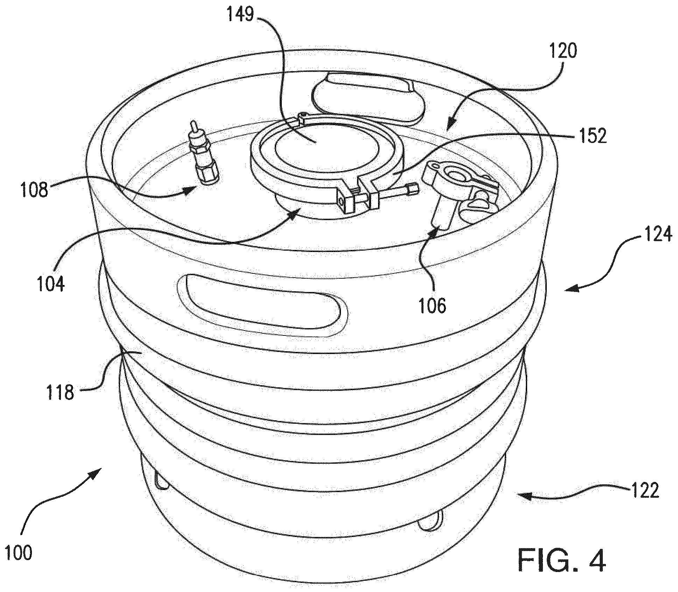

With reference to Fig. 4, powder management container 100 is shown according to an exemplary embodiment. Powder management container 100 includes a keg body 118. Keg body 118 has a first end 120, a second end 122, and a body segment 124 extending between first end 120 and second end 122. Keg body 118 bounds interior 102 (shown in Fig. 2) and is configured for storing a powder, e.g., a metallic powder 10 (shown in Fig. 1), for use in additive manufacturing apparatus 34 (shown in Fig. 2).

Keg body 118 defines first port 104. First port 104 is located on first end 120 of keg body 118, is fluidly coupled to keg body interior 102, and is configured for transferring powder 10 into and from interior 102 of keg body 118. More particularly, first port 104 is configured to receive powder 10 from one or more powder jars, e.g., jar 12 (shown in Fig. 1), and/or unused powder portion 36 (shown in Fig. 2) from additive manufacturing apparatus 34 for storage and/or re-use in a subsequent build operation. The unused powder can be stored within powder management container 100 in association with a lot identifier, e.g., lot information 16 (shown in Fig. 1), of powder 10.

Keg body 118 also defines second port 106. Second port 106 is located on first end 120 of keg body 118, is fluidly coupled to keg body interior 102, and is configured for controlling atmosphere 22 (shown in Fig. 1) within keg body interior 102. In particular, second port 106 is offset from first port 104 to provide spatial separation and prevent intermixing of gas 24 exiting keg body interior 102 and powder 10 entering keg body interior 102 as well as placing vacuum source 26 (shown in Fig. 1) or inert gas source 18 (shown in Fig. 1) in fluid communication with keg body interior 102.

Keg body 118 additionally defines third port 108. Third port 108 is located on first end 120 of keg body 118, is fluidly coupled to keg body interior 102, and is configured for controlling atmosphere 22 within keg body interior 102 in cooperation with second port 106. In particular, third port 108 is offset from first port 104. As above, being offset from first port 104, keg body interior 102 can be placed in fluid communication with vacuum source 26 or inert gas source 18 while the other of with a vacuum source 26 or inert gas source 18 is in fluid communication with keg body interior 102 without gas exiting from interior 112 contaminating powder 10 as it enters powder management container 100.

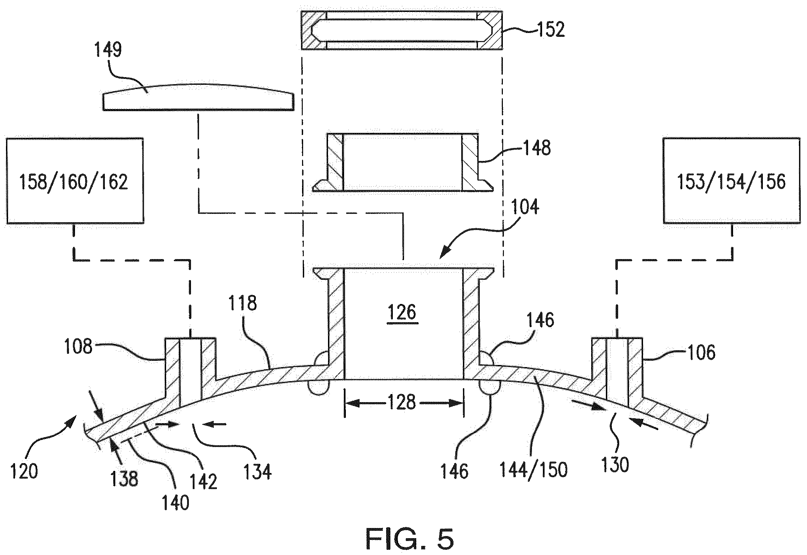

In certain embodiments keg body 118 conforms dimensionally to a standard beverage keg. Keg body 118 can be a commodity-type keg body, keg body 118 dimensionally conforming to US keg, DIN keg, or Euro keg standards prior to modification for power storage, e.g., below port 108 and port 106 as shown in Fig. 5 relative to the top of the drawing figure. In certain embodiments, keg body interior 112 has a volume that is between about 5 liters (1.32 gallons) and about 60 liters (15.5 gallons).

In accordance with certain embodiments, keg body 118 can conform to the dimensions of a one-half barrel keg and have a volume of about 60 liters (15.5 gallons)

In accordance with certain embodiments, keg body 118 can conform to the dimensions of a one-quarter barrel keg and have a volume of about 30 liters (7.75 gallons).

Dimensional conformity with standard beverage kegs allows for handling powder management container 100 with existing material handling equipment as well as providing volumes of powder commensurate with that required for builds of additively manufactured articles, such as fuel nozzles by way of non-limiting examples.

Dimensional conformity can be provided by modifying a commodity-type beverage keg. In this respect a first aperture can be created by removing a first portion of the keg body extending about the Sankey female-threaded portion of the keg, removing a second portion of the keg body offset from the first aperture, and removing a third portion of the keg body offset from the first aperture and laterally offset from the second aperture. The first port can then be welded to the keg body in the first port, the second port welded to the keg body in the second aperture, and the third port welded to the keg body in the third aperture. Welding the ports to the keg body can include defining food-grade polished welds in the keg body, food-grade polished weld preventing lot intermixing by preventing capture of powder in the weld as originally formed.

Also shown in Fig. 4 is a cap 149. Cap 149 includes a flat plate body that is seated on first port 104 and secured thereto by a tri-clamp sanitary fitting 152. Cap 149 provides sealing to keg body 118, allowing keg body 118 to be sealed for storage purposes. It is contemplated that cap 149 be emplaced on first port 104 and a vacuum pulled on the interior of keg body118 so that an inert gas can be backfilled into keg body 118. This allows for powder to be easily stored between uses in keg body 118 as well allowing for ready connection to other various systems for filling and discharge of the powder.

With reference to Fig. 5, a portion of keg body first end 120 is shown. Keg body 118 has a wall thickness 138. In certain embodiments wall thickness 138 is equivalent to the wall thickness of a commodity-type beverage (e.g., beer) keg, as shown with solid line 142. In accordance with certain embodiments, wall thickness 138 can be greater than the wall thickness of a commodity-type beverage keg, as shown with dashed line 140. As will be appreciated by those of skill in the art in view of the present disclosure, certain powdered metals can be more dense than beverage material or other products intended for commodity-type kegs. Greater wall thickness may allow transfer of powder into powder management container 100 with greater weights than otherwise possible without damaging keg body 118.

First port 104 defines a flow area 126 with a width 128. Width 128 is greater than a width 130 of a flow area 132 defined by second port 106. Width 128 is also greater than a width 134 of a flow area 136 defined by third port 108. In certain embodiments width 128 is about four inches (10.2 centimeters). Widths of this size allow for metallic powders, e.g., powder 10 (shown in Fig. 1), to flow freely through first port 104 without bridging. This can eliminate the need to assist powder flow with an external pressure source and/or mechanical vibration.

As also shown in Fig. 5, keg body 118 is formed from stainless steel 144 and includes one or more weld 146. As stainless steel 144 is relatively inert, stainless steel 144 reduces the likelihood that the material forming keg body 118 will contaminate powder 10 (shown in Fig. 1) contained within powder management container 100. In certain embodiments keg body 118 can be formed from an aluminum or aluminum alloy 150. Use of aluminum or aluminum alloy can reduce the chance of contaminating aluminum powders with material eroded from the interior surface of keg body 118.

Weld 146 is a food-grade polished weld. As will be appreciated by those of skill in the art in view of the present disclosure, food-grade polished welds resist capture of particulate, reducing the likelihood of intermixing powders from prior builds, potentially from other lots, into powder subsequently introduced into powder management container 100.

Tri-clamp flange 148 can be coupled to first port 104. Tri-clamp flange 148 is fluidly coupled to keg body 118 through first port 104. Tri-clamp flange 148 allows for connection of powder management container 100 to additive manufacturing apparatus 34 (shown in Fig. 1) with standardized fittings and without specialized tools, simplifying operation of additive manufacturing apparatus. Alternatively, cap 149 can be secured to tri-clamp flange 148 by tri-clamp sanitary fitting 152.

In certain embodiments a second tri-clamp sanitary fitting 153, a threaded fitting 154, or a Klein Flansche (KF) fitting 156 can be coupled to keg body 118 at second port 106. More particularly, tri-clamp sanitary fitting 152, threaded fitting 154, or KF fitting 156 can be coupled to keg body 118 at second port 106 such that second port 106 fluidly couples tri-clamp sanitary fitting 152, threaded fitting 154, or KF fitting 156 to keg body interior 102 through second port 106. Use of tri-clamp sanitary fitting 152, threaded fitting 154, or KF fitting 156 simplifies connection of inert gas source 18 (shown in Fig. 1) to powder management container 100.

In accordance with certain embodiments a tri-clamp sanitary fitting 158, a threaded fitting 160, or a KF fitting 162 can be coupled to keg body 118 at third port 108. More particularly, tri-clamp sanitary fitting 158, threaded fitting 160, or KF fitting 162 can be coupled to keg body 118 at third port 108 such that third port 108 fluidly couples tri-clamp sanitary fitting 158, threaded fitting 160, or KF fitting 162 to keg body interior 102 through third port 108. Use of tri-clamp sanitary fitting 158, threaded fitting 160, or KF fitting 162 simplifies connection of vacuum source 26 (shown in Fig. 1) to powder management container 100.

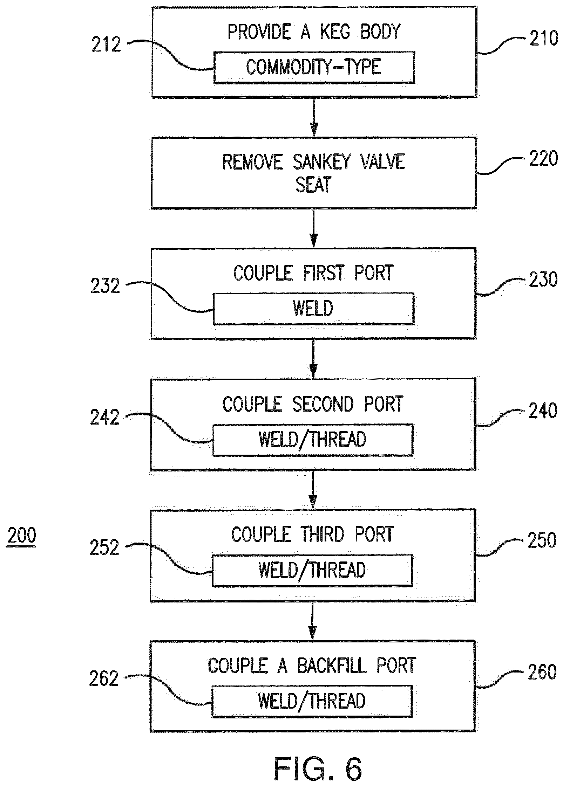

With reference to Fig. 6, a method 200 of making a powder management container, e.g., powder management container 100 (shown in Fig. 1), as shown. As shown in box 210, a keg body, e.g., keg body 118 (shown in Fig. 1) is provided. The keg body can be a commodity-type keg body, as shown with box 212. A Sankey valve seat can be removed from the keg body, as shown by box 220. A first port, e.g., first port 104 (shown in Fig. 1), is coupled to the keg body and fluidly coupled to the keg body interior for transferring powder into and from the keg body interior, as shown by box 230. The first port can be coupled by a weld, e.g., weld 146 (shown in Fig. 5), as shown with box 232. A second port, e.g., second port 106 (shown in Fig 1) can be coupled to the keg body, as shown by box 240. The second port can be welded or threaded to the keg body, as shown by box 242. A third port, e.g., third port 108 (shown in Fig. 1), can be coupled to the keg body and placed in fluid communication with the keg body interior for controlling the atmosphere within the keg body interior, as shown with box 250. The third port can be welded or threaded to the keg body, as shown by box 252. A backfill port, e.g., backfill port 116 (shown in Fig. 2), can be coupled to the keg body and placed in fluid communication with the keg body interior for transferring powder from the keg body interior, as shown with box 260. The backfill port can be welded to the keg body as shown by box 262.

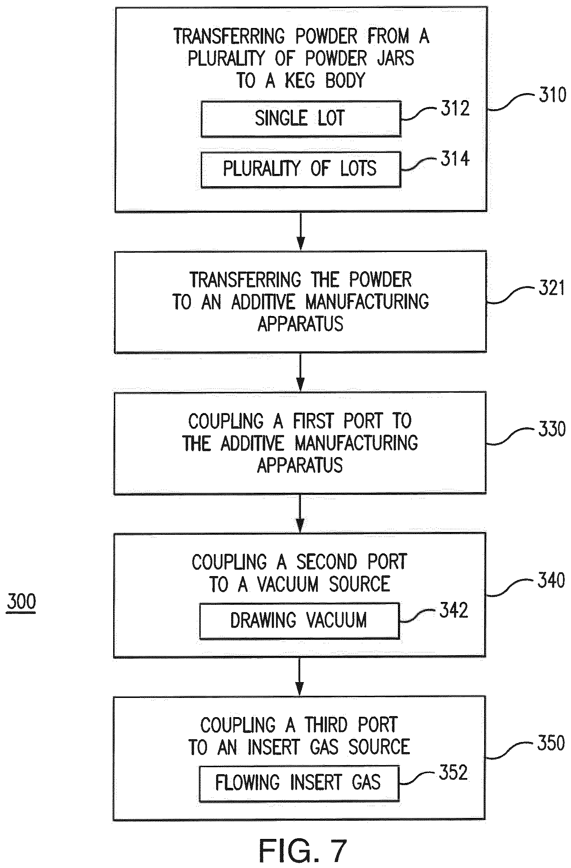

With reference to Fig. 7, a method 700 of managing powder for an additive manufacturing technique is shown. Method 700 includes coupling a first port of a powder management container, e.g., first port 104 (shown in Fig. 1), to an additive manufacturing apparatus, e.g., additive manufacturing apparatus 34 (shown in Fig. 2), as shown by box 330. A second port of the powder management container, e.g., second port 106 (shown in Fig. 1), is coupled to an inert gas source, e.g., inert gas source 18 (shown in Fig. 1), as shown by box 350. Inert gas is flowed into the powder management container, as shown by box 352. A third port, e.g., third port 108 (shown in Fig. 1), is connected to a vacuum source, e.g., vacuum source 26 (shown in Fig. 1). Powder is then transferred either into the powder management container from the additive manufacturing apparatus as shown in Fig. 3 or powder transferred into the powder management container from one or more powder jars, e.g., powder jar 12 (shown in Fig. 1), as shown with box 310. The powder transferred into the powder management container can be from a single powder lot, as shown with box 312. The powder transferred into the powder management container can be from a plurality of powder lots, as shown with box 314.

The methods and systems of the present disclosure, as described above and shown in the drawings provide for powder management with superior properties including the capability to maintain the traceability of metallic powder lots to articles manufactured using the powder. While the apparatus and methods of the subject disclosure have been shown and described with reference to preferred embodiments, those skilled in the art will readily appreciate that changes and/or modifications may be made thereto without departing from the scope of the claims.

## Claims

1. A powder management system, comprising :
an additive manufacturing machine;
a first powder management container and a second powder management container each fluidly connected to the additive manufacturing machine, the first container and
the second container each comprising:
a keg body (118) having an interior for storing a metallic powder;
a first port (104) defined by the keg body (118), the first port (104) fluidly coupled to the keg body (118) interior for transferring powder into and from the interior (102) of the keg body (118); and
a second port (106) defined by the keg body (118), the second port fluidly coupled to the keg body interior (102) for controlling atmosphere within the interior of the keg body (118) and **characterized by** further comprising
a third port (108) defined by the keg body (118), the third port (108) offset from the first port (104) and the second port (106), the third port (108) fluidly coupled with the keg body interior for controlling atmosphere within the interior of the keg body (118);
wherein the first powder management container is connected to a powder conduit for transferring build powder to the additive manufacturing machine; and
wherein the second powder management container is connected to a reuse conduit of the additive manufacturing machine for storing unused powder.

2. The powder management system as recited in claim 1, wherein the keg body (118) is a commodity-type beverage keg below the first port (104) and the second port (106), wherein the commodity-type keg body dimensionally conforms to US keg, DIN keg, or Euro keg standards prior to modification for powder storage.

3. The powder management system as recited in claim 1 or 2, wherein the interior (102) of keg body (118) has a volume that is between about 5 liters (1.32 gallons ) and about 60 liters (15.5 gallons).

4. The powder management system as recited in claim 1, 2 or 3, wherein the keg body (118) has a wall thickness that is greater than thickness of a commodity-type keg of substantially equivalent volume, wherein the commodity-type keg body dimensionally conforms to US keg, DIN keg, or Euro keg standards prior to modification for powder storage.

5. The powder management system as recited in any preceding claim, wherein the keg body (118) is formed from aluminum, an aluminum alloy, or stainless steel; and/or wherein the keg body (118) includes one or more food-grade polished weld, wherein the food-grade polished weld is configured to prevent lot intermixing by preventing capture of powder in the weld as originally formed.

6. The powder management system as recited in any preceding claim, wherein the first port (104) is centrally located on an end of the keg body (118), or wherein the first port (104) and the second port are located on a first end of the keg body (118).

7. The powder management system as recited in any preceding claim, wherein the first port (104) has a flow area that is greater than a flow area of the second port (106).

8. The powder management system as recited in any preceding claim, further comprising a tri-clamp flange coupled to the first port (104) and fluidly coupled to the keg body (118) interior through the first port (104), or further comprising a tri-clamp sanitary, a threaded fitting, or a Klein Flansche fitting coupled to the keg body (118) and fluidly coupled to the keg body interior (102) through the second port (106).

9. The powder management system as recited in any preceding claim, wherein the first port (104) has a flow area with a width that is about 10.2 centimeters (4 inches).

10. The powder management system as recited in any preceding claim, wherein the third port (108) has a flow area that is smaller than a flow area of the first port (104), and/or further comprising a tri-clamp sanitary, a threaded fitting, or a Klein Flansche fitting coupled to the keg body and in fluid communication with the keg body interior (102) through the third port (108).

11. The powder management system as recited in any preceding claim, wherein the first port (104) and the second port (106) are arranged on a first end of keg body (118), and further comprising a backfill port (116) defined by the keg body (118), the backfill port arranged on a second end of the keg body (118) opposite the first end of the keg body (118).

12. A powder management system as recited in any preceding claim, wherein the keg body (118) is a commodity-type keg body, wherein the interior (102) of keg body (118) has a volume that is between about 5 liters (1.32 gallons) and about 60 liters (15.5 gallons), the powder management container further comprising:
a tri-clamp flange coupled to the keg body (118) and fluidly coupled to the keg body interior by the first port (104), the first port (104) having a 10.2 centimeters (4 inches) wide flow area; and
a backfill port (112) arranged on a second end of the keg body (118) opposite the first end of the keg body (118).

13. A method of making a powder management container connected to the powder management system of any of claims 1 to 12, comprising:
removing a Sankey valve from a keg body (118);
coupling a first port (104) to the keg body (118), the first port (104) in fluid communication with an interior of the keg body (118) for transferring powder into and from the keg body interior (102); and
coupling a second port (106) to the keg body (118), the second port (106) in fluid communication with the interior of the keg body (118) for controlling atmosphere within the keg body interior (102), and **characterized by**
coupling a third port to the keg body (118), the third port (106) in fluid communication with the interior of the keg body (118) for controlling atmosphere within the keg body interior (102).

14. The method as recited in claim 13, further comprising:
coupling a backfill port to the keg body (118), the backfill port (112) in fluid communication with the interior (102) of the keg body (118) for transferring powder from the keg body interior (102).

15. A method of managing powder for an additive manufacturing technique, comprising:
coupling a first port (104) of a keg body (118) to an additive manufacturing apparatus, the first port (104) disposed in fluid communication with an interior (102) of the keg body (118);
coupling a second port (106) of the keg body (118) to a vacuum or inert gas source, the second port disposed in fluid communication with the interior of the keg body; and **characterized by**
coupling a third port to the keg body (118), the third port (106) in fluid communication with the interior of the keg body (118) for controlling atmosphere within the keg body interior;
transferring powder into the keg body (118) from the additive manufacturing apparatus; and
controlling atmosphere within the interior (102) of the keg body (118) by drawing a vacuum or flowing an inert gas through the second port (106).

## Patentansprüche

1. Pulvermanagementsystem, umfassend:
eine additive Fertigungsmaschine;
einen ersten Pulvermanagementbehälter und einen zweiten Pulvermanagementbehälter, die jeweils in Fluidverbindung mit der additiven Fertigungsmaschine stehen, wobei der erste Behälter und der zweite Behälter jeweils Folgendes umfassen:
einen Fasskörper (118), der einen Innenraum zum Speichern eines Metallpulvers aufweist;
einen ersten Anschluss (104), der durch den Fasskörper (118) definiert ist, wobei der erste Anschluss (104) in Fluidverbindung mit dem Innenraum des Fasskörpers (118) zum Transportieren von Pulver in den und aus dem Innenraum (102) des Fasskörpers (118) steht; und
einen zweiten Anschluss (106), der durch den Fasskörper (118) definiert ist, wobei der zweite Anschluss in Fluidverbindung mit dem Innenraum (102) des Fasskörpers zum Steuern der Atmosphäre innerhalb des Innenraums des Fasskörpers (118) steht, und **dadurch gekennzeichnet, dass** sie ferner Folgendes umfassen
einen dritten Anschluss (108), der durch den Fasskörper (118) definiert ist, wobei der dritte Anschluss (108) von dem ersten Anschluss (104) und dem zweiten Anschluss (106) versetzt ist, wobei der dritte Anschluss (108) in Fluidverbindung mit dem Innenraum des Fasskörpers zum Steuern der Atmosphäre innerhalb des Innenraums des Fasskörpers (118) steht;
wobei der erste Pulvermanagementbehälter mit einer Pulverleitung zum Transportieren von Baupulver zu der additiven Fertigungsmaschine verbunden ist; und
wobei der zweite Pulvermanagementbehälter mit einer Wiederverwendungsleitung der additiven Fertigungsmaschine zum Speichern nicht verwendeten Pulvers verbunden ist.

2. Pulvermanagementsystem nach Anspruch 1, wobei der Fasskörper (118) ein Getränkefass für Waren unter dem ersten Anschluss (104) und dem zweiten Anschluss (106) ist, wobei der Fasskörper für Waren vor der Modifikation zur Pulverspeicherung maßlich US-, DIN- oder Euro-Fassnormen entspricht.

3. Pulvermanagementsystem nach Anspruch 1 oder 2, wobei der Innenraum (102) des Fasskörpers (118) ein Volumen aufweist, das zwischen etwa 5 Liter (1,32 Gallonen) und etwa 60 Liter (15,5 Gallonen) beträgt.

4. Pulvermanagementsystem nach Anspruch 1, 2 oder 3, wobei der Fasskörper (118) eine Wanddicke aufweist, die größer als eine Dicke eines Fasses für Waren eines im Wesentlichen vergleichbaren Volumens ist, wobei der Fasskörper für Waren vor der Modifikation zur Pulverspeicherung maßlich US-, DIN- oder Euro-Fassnormen entspricht.

5. Pulvermanagementsystem nach einem der vorstehenden Ansprüche, wobei der Fasskörper (118) aus Aluminium, einer Aluminiumlegierung oder rostfreiem Stahl hergestellt ist; und/oder wobei der Fasskörper (118) einen oder mehrere in Lebensmittelqualität polierte Schweißnähte beinhaltet, wobei die in Lebensmittelqualität polierte Schweißnaht so konfiguriert ist, dass sie eine Chargenvermischung durch Verhindern eines Festhaltens von Pulver in der Schweißnaht, so wie sie ursprünglich ausgebildet ist, verhindert.

6. Pulvermanagementsystem nach einem der vorstehenden Ansprüche, wobei der erste Anschluss (104) zentral an einem Ende des Fasskörpers (118) angeordnet ist oder wobei der erste Anschluss (104) und der zweite Anschluss an einem ersten Ende des Fasskörpers (118) angeordnet sind.

7. Pulvermanagementsystem nach einem der vorstehenden Ansprüche, wobei der erste Anschluss (104) eine Strömungsfläche aufweist, die größer als eine Strömungsfläche des zweiten Anschlusses (106) ist.

8. Pulvermanagementsystem nach einem der vorstehenden Ansprüche, ferner einen Tri-Clamp-Flansch umfassend, der mit dem ersten Anschluss (104) gekoppelt ist und in Fluidverbindung mit dem Innenraum des Fasskörpers (118) über den ersten Anschluss (104) steht, oder ferner einen Tri-Clamp-Sanitär-, einen Gewindeanschluss oder einen Klein-Flansch-Anschluss, der mit dem Fasskörper (118) gekoppelt ist und in Fluidverbindung mit dem Fasskörperinnenraum (102) über den zweiten Anschluss (106) steht, umfassend.

9. Pulvermanagementsystem nach einem der vorstehenden Ansprüche, wobei der erste Anschluss (104) eine Strömungsfläche mit einer Breite, die etwa 10,2 Zentimeter (4 Zoll) beträgt, aufweist.

10. Pulvermanagementsystem nach einem der vorstehenden Ansprüche, wobei der dritte Anschluss (108) eine Strömungsfläche aufweist, die kleiner als eine Strömungsfläche des ersten Anschlusses (104) ist, und/oder ferner einen Tri-Clamp-Sanitär- , einen Gewindeanschluss oder einen Klein-Flansch-Anschluss umfassend, der mit dem Fasskörper gekoppelt ist und in Fluidverbindung mit dem Fasskörperinnenraum (102) über den dritten Anschluss (108) steht.

11. Pulvermanagementsystem nach einem der vorstehenden Ansprüche, wobei der erste Anschluss (104) und der zweite Anschluss (106) an einem ersten Ende des Fasskörpers (118) angeordnet sind, und ferner einen Auffüllanschluss (116), der durch den Fasskörper (118) definiert ist, umfassend, wobei der Auffüllanschluss an einem zweiten Ende des Fasskörpers (118) gegenüber dem ersten Ende des Fasskörpers (118) angeordnet ist.

12. Pulvermanagementsystem nach einem der vorstehenden Ansprüche, wobei der Fasskörper (118) ein Fasskörper für Waren ist, wobei der Innenraum (102) des Fasskörpers (118) ein Volumen aufweist, das zwischen etwa 5 Liter (1,32 Gallonen) und etwa 60 Liter (15,5 Gallonen) beträgt, wobei der Pulvermanagementbehälter ferner Folgendes umfasst:
einen Tri-Clamp-Flansch, der mit dem Fasskörper (118) gekoppelt ist und in Fluidverbindung mit dem Innenraum des Fasskörpers durch den ersten Anschluss (104) steht, wobei der erste Anschluss (104) eine 10,2 Zentimeter (4 Zoll) breite Strömungsfläche aufweist; und
einen Auffüllanschluss (112), der an einem zweiten Ende des Fasskörpers (118) gegenüber dem ersten Ende des Fasskörpers (118) angeordnet ist.

13. Verfahren zum Herstellen eines Pulvermanagementbehälters, der mit dem Pulvermanagementsystem nach einem der Ansprüche 1 bis 12 verbunden ist, umfassend:
Entfernen eines Sankey-Ventils von einem Fasskörper (118);
Koppeln eines ersten Anschlusses (104) mit dem Fasskörper (118), wobei der erste Anschluss (104) in Fluidverbindung mit einem Innenraum des Fasskörpers (118) zum Transportieren von Pulver in den und aus dem Fasskörperinnenraum (102) steht; und
Koppeln eines zweiten Anschlusses (106) mit dem Fasskörper (118), wobei der zweite Anschluss (106) in Fluidverbindung mit dem Innenraum des Fasskörpers (118) zum Steuern der Atmosphäre innerhalb des Fasskörperinnenraums (102) steht, und **gekennzeichnet durch**
Koppeln eines dritten Anschlusses mit dem Fasskörper (118), wobei der dritte Anschluss (106) in Fluidverbindung mit dem Innenraum des Fasskörpers (118) zum Steuern der Atmosphäre innerhalb des Fasskörperinnenraums (102) steht.

14. Verfahren nach Anspruch 13, ferner Folgendes umfassend:
Koppeln eines Auffüllanschlusses mit dem Fasskörper (118), wobei der Auffüllanschluss (112) in Fluidverbindung mit dem Innenraum (102) des Fasskörpers (118) zum Transportieren von Pulver aus dem Fasskörperinnenraum (102) steht.

15. Verfahren zum Managen von Pulver für ein additives Fertigungsverfahren, umfassend:
Koppeln eines ersten Anschlusses (104) eines Fasskörpers (118) mit einem additiven Fertigungsapparat, wobei der erste Anschluss (104) in Fluidverbindung mit einem Innenraum (102) des Fasskörpers (118) angeordnet ist;
Koppeln eines zweiten Anschlusses (106) des Fasskörpers (118) mit einer Vakuum- oder Inertgasquelle, wobei der zweite Anschluss in Fluidverbindung mit dem Innenraum des Fasskörpers angeordnet ist; und
**gekennzeichnet durch**
Koppeln eines dritten Anschlusses an den Fasskörper (118), wobei der dritte Anschluss (106) in Fluidverbindung mit dem Innenraum des Fasskörpers (118) zum Steuern der Atmosphäre innerhalb des Fasskörperinnenraums ist;
Transportieren von Pulver in den Fasskörper (118) von dem additiven Fertigungsapparat; und
Steuern der Atmosphäre innerhalb des Innenraums (102) des Fasskörpers (118) durch Anlegen eines Vakuums oder Strömenlassen eines Inertgases durch den zweiten Anschluss (106).

## Revendications

1. Système de gestion de poudre comprenant :
une machine de fabrication additive ;
un premier contenant de gestion de poudre et un deuxième contenant de gestion de poudre reliés chacun de manière fluidique à la machine de fabrication additive, le premier contenant et le deuxième contenant comprenant chacun :
un corps de fût (118) ayant une partie intérieure pour stocker une poudre métallique ;
un premier orifice (104) défini par le corps de fût (118), le premier orifice (104) étant couplé de manière fluidique à la partie intérieure de corps de fût (118) pour transférer une poudre dans et depuis la partie intérieure (102) du corps de fût (118) ; et
un deuxième orifice (106) défini par le corps de fût (118), le deuxième orifice étant couplé de manière fluidique à la partie intérieure (102) de corps de fût pour réguler l'atmosphère à l'intérieur de la partie intérieure du corps de fût (118) et **caractérisé en ce qu'**il comprend en outre
un troisième orifice (108) défini par le corps de fût (118), le troisième orifice (108) étant décalé par rapport au premier orifice (104) et au deuxième orifice (106), le troisième orifice (108) étant couplé de manière fluidique à la partie intérieure de corps de fût pour réguler l'atmosphère à l'intérieur de la partie intérieure du corps de fût (118) ;
dans lequel le premier contenant de gestion de poudre est relié à un conduit de poudre pour transférer une poudre de fabrication vers la machine de fabrication additive ; et
dans lequel le deuxième contenant de gestion de poudre est relié à un conduit de réutilisation de la machine de fabrication additive pour stocker la poudre non utilisée.

2. Système de gestion de poudre selon la revendication 1, dans lequel le corps de fût (118) est un fût de boisson de base en dessous du premier orifice (104) et du deuxième orifice (106), dans lequel le corps de fût de base est dimensionnellement conforme aux normes américaines des fûts, aux normes DIN des fûts ou aux normes européennes des fûts avant modification pour le stockage de poudre.

3. Système de gestion de poudre selon la revendication 1 ou 2, dans lequel la partie intérieure (102) de corps de fût (118) a un volume compris entre environ 5 litres (1,32 gallon) et environ 60 litres (15,5 gallons).

4. Système de gestion de poudre selon la revendication 1, 2 ou 3, dans lequel le corps de fût (118) a une épaisseur de paroi qui est supérieure à une épaisseur d'un fût de base de volume sensiblement équivalent, dans lequel le corps de fût de base est dimensionnellement conforme aux normes américaines des fûts, aux normes DIN des fûts ou aux normes européennes des fûts avant modification pour le stockage de poudre.

5. Système de gestion de poudre selon une quelconque revendication précédente, dans lequel le corps de fût (118) est formé d'aluminium, d'un alliage d'aluminium ou d'acier inoxydable ; et/ou dans lequel le corps de fût (118) comporte une ou plusieurs soudures polies de qualité alimentaire, dans lequel la soudure polie de qualité alimentaire est configurée pour empêcher le mélange de lots en empêchant la capture de poudre dans la soudure telle qu'elle est formée à l'origine.

6. Système de gestion de poudre selon une quelconque revendication précédente, dans lequel le premier orifice (104) est situé au centre sur une extrémité du corps de fût (118), ou dans lequel le premier orifice (104) et le deuxième orifice sont situés sur une première extrémité du corps de fût (118).

7. Système de gestion de poudre selon une quelconque revendication précédente, dans lequel le premier orifice (104) a une section d'écoulement qui est supérieure à une section d'écoulement du deuxième orifice (106).

8. Système de gestion de poudre selon une quelconque revendication précédente, comprenant en outre une bride à trois pinces couplée au premier orifice (104) et couplée de manière fluidique à la partie intérieure de corps de fût (118) par le premier orifice (104), ou comprenant en outre un raccord sanitaire à trois pinces, un raccord fileté ou un raccord Klein Flansche couplé au corps de fût (118) et couplé de manière fluidique à la partie intérieure (102) de corps de fût par le deuxième orifice (106) .

9. Système de gestion de poudre selon une quelconque revendication précédente, dans lequel le premier orifice (104) a une section d'écoulement d'une largeur d'environ 10,2 centimètres (4 pouces) .

10. Système de gestion de poudre selon une quelconque revendication précédente, dans lequel le troisième orifice (108) a une section d'écoulement qui est plus petite qu'une section d'écoulement du premier orifice (104), et/ou comprenant en outre un raccord sanitaire à trois pinces, un raccord fileté ou un raccord Klein Flansche couplé au corps de fût et en communication fluidique avec la partie intérieure (102) de corps de fût par le troisième orifice (108).

11. Système de gestion de poudre selon une quelconque revendication précédente, dans lequel le premier orifice (104) et le deuxième orifice (106) sont agencés sur une première extrémité du corps de fût (118), et comprenant en outre un orifice de remplissage (116) défini par le corps de fût (118), l'orifice de remplissage étant agencé sur une deuxième extrémité du corps de fût (118) opposée à la première extrémité du corps de fût (118).

12. Système de gestion de poudre selon une quelconque revendication précédente, dans lequel le corps de fût (118) est un corps de fût de base, dans lequel la partie intérieure (102) de corps de fût (118) a un volume compris entre environ 5 litres (1,32 gallon) et environ 60 litres (15,5 gallons), le contenant de gestion de poudre comprenant en outre :
une bride à trois pinces couplée au corps de fût (118) et couplée de manière fluidique à la partie intérieure de corps de fût par le premier orifice (104), le premier orifice (104) ayant une section d'écoulement de 10,2 centimètres (4 pouces) de large ; et
un orifice de remplissage (112) agencé sur une deuxième extrémité du corps de fût (118) opposée à la première extrémité du corps de fût (118).

13. Procédé de fabrication d'un contenant de gestion de poudre relié au système de gestion de poudre selon l'une quelconque des revendications 1 à 12, comprenant :
le retrait d'une vanne Sankey d'un corps de fût (118) ;
le couplage d'un premier orifice (104) au corps de fût (118), le premier orifice (104) étant en communication fluidique avec une partie intérieure du corps de fût (118) pour transférer une poudre dans et depuis la partie intérieure (102) de corps de fût ; et
le couplage d'un deuxième orifice (106) au corps de fût (118), le deuxième orifice (106) étant en communication fluidique avec la partie intérieure du corps de fût (118) pour réguler l'atmosphère à l'intérieur de la partie intérieure (102) de corps de fût, et **caractérisé par**
le couplage d'un troisième orifice au corps de fût (118), le troisième orifice (106) étant en communication fluidique avec la partie intérieure du corps de fût (118) pour réguler l'atmosphère à l'intérieur de la partie intérieure (102) de corps de fût.

14. Procédé selon la revendication 13, comprenant en outre :
le couplage d'un orifice de remplissage au corps de fût (118), l'orifice de remplissage (112) étant en communication fluidique avec la partie intérieure (102) du corps de fût (118) pour transférer une poudre depuis la partie intérieure (102) de corps de fût.

15. Procédé de gestion de poudre pour une technique de fabrication additive, comprenant :
le couplage d'un premier orifice (104) d'un corps de fût (118) à un appareil de fabrication additive, le premier orifice (104) étant disposé en communication fluidique avec une partie intérieure (102) du corps de fût (118) ;
le couplage d'un deuxième orifice (106) du corps de fût (118) à une source de vide ou de gaz inerte, le deuxième orifice étant disposé en communication fluidique avec la partie intérieure du corps de fût ; et
**caractérisé par**
le couplage d'un troisième orifice au corps de fût (118), le troisième orifice (106) étant en communication fluidique avec la partie intérieure du corps de fût (118) pour réguler l'atmosphère à l'intérieur de la partie intérieure de corps de fût ;
le transfert d'une poudre dans le corps de fût (118) depuis l'appareil de fabrication additive ; et
la régulation de l'atmosphère à l'intérieur de la partie intérieure (102) du corps de fût (118) en créant un vide ou en faisant circuler un gaz inerte par le deuxième orifice (106).
